# EUROPEAN PATENT APPLICATION

(11) **EP 4 113 328 A1**
(43) Date of publication of application: **04.01.2023**
(21) Application number: 22185911.9
(22) Date of filing: 20.07.2022
(51) Int. Cl.: G06F 16/901

(54) **METHOD AND APPARATUS FOR PROCESSING DATA BASED ON KNOWLEDGE GRAPH, ELECTRONIC DEVICE AND MEDIUM**

(30) Priority: 22.07.2021 CN 202110831497
(71) Applicant: Beijing Baidu Netcom Science and Technology Co., Ltd., Beijing 100085 (CN)
(72) Inventor: GU, Nanxi, Beijing, 100085 (CN)
(74) Representative: Maiwald GmbH

(57) **Abstract**

Disclosed are a method for processing data, an electronic device and a medium. The technical solution includes: acquiring (101, 301) a table to be processed and a corresponding table name; recognizing (102, 302) the table to acquire each cell content in the table; determining (103) a row attribute and a column attribute corresponding to each cell contents based on a matching degree between each cell content and a word segmentation in a preset table lexicon; and determining (104, 305) a quadruple list corresponding to the table based on the table name, the row attribute and the column attribute corresponding to each cell content.

## Description

### TECHNICAL FIELD

The disclosure relates to a field of computer technologies, particularly to a field of artificial intelligence (AI) technologies such as natural language processing (NLP) and knowledge graph (KG), and specifically to a method and an apparatus for processing data based on a knowledge graph (KG), an electronic device and a storage medium.

### BACKGROUND

Information extraction and mining of a complex table contained in a document is a common problem in a field of information retrieval. Entity extraction, document classification, knowledge production, retrieval, recommendation, question answering and the like based on a document generally depend on extraction of multi-source document information. A table as a common data induction format of a document has diverse row and column merging relationships, and content and style bound to each other. Simple extraction of a value field of a table may cause a loss of layout information, which may affect an accuracy of understanding an unstructured content.

Therefore, it is an urgent problem to be solved how to improve an integrity of a content extracted from the table.

### SUMMARY

The disclosure provides a method and an apparatus for processing data based on a knowledge graph (KG), an electronic device and a storage medium.

According to an aspect of the disclosure, a method for processing data based on a KG is provided, and includes: acquiring a table to be processed and a table name corresponding to the table; recognizing the table to acquire each cell content in the table; determining a row attribute and a column attribute corresponding to each cell content based on a matching degree between each cell content and a word segmentation in a preset table lexicon; and determining a quadruple list corresponding to the table based on the table name, the row attribute and the column attribute corresponding to each cell content, in which each quadruple in the quadruple list includes the table name, the row attribute, the column attribute, and an attribute value.

Optionally, determining the row attribute and each column attribute corresponding to the cell content based on the matching degree between each cell content and the word segmentation in the preset table lexicon, includes: determining a row attribute of each row and a column attribute of each column included in the table based on the matching degree between each cell content and the word segmentation in the preset table lexicon; and determining the row attribute and the column attribute corresponding to each cell content based on the row attribute of each row and the column attribute of each column included in the table and a row and a column where each cell content is located.

Optionally, determining the row attribute of each row and the column attribute of each column included in the table based on the matching degree between each cell content and the word segmentation in the preset table lexicon, includes: determining a type of each first cell content included in each column in the table based on the matching degree between each first cell content and the word segmentation in the preset table lexicon; determining each first cell content as a row attribute in response to the type of each first cell content being an attribute; determining a type of each second cell content included in each row in the table based on the matching degree between each second cell content and the word segmentation in the table lexicon; and determining each second cell content as a column attribute in response to the type of each second cell content being an attribute.

Optionally, determining the type of each first cell content included in each column in the table based on the matching degree between each first cell content and the word segmentation in the table lexicon, includes: determining the type of each first cell content as an attribute in response to the matching degree between each first cell content and any word segmentation being greater than a threshold value; and determining the type of each first cell content as an attribute value in response to the matching degree between each first cell content and each word segmentation being less than or equal to the threshold value.

Optionally, after determining the type of each first cell content, the method further includes: updating the type of a first cell content to a row attribute in response to the type of the first cell content being an attribute value and the type of each first cell content other than the first cell content being an attribute.

Optionally, determining the row attribute and the column attribute corresponding to each cell content based on the row attribute of each row and the column attribute of each column included in the table and the row and the column where each cell content is located, includes: acquiring a row attribute of a row at the same position as each attribute value, and a column attribute of a column at the same position as each attribute value by taking each attribute value as a starting point.

Optionally, determining the row attribute and the column attribute corresponding to each cell content based on the row attribute of each row and the column attribute of each column included in the table and the row and the column where each cell content is located, includes: acquiring a third cell content in the same column as each first column attribute by taking each first column attribute with a highest level as a starting point; acquiring a fourth cell content in the same column as the third cell content in response to the third cell content being a column attribute; and acquiring a row attribute of a row at the same position as the fourth cell content in response to the fourth cell content being an attribute value.

Optionally, acquiring the table to be processed and the table name corresponding to the table, includes: acquiring the table by parsing a document to be parsed; and determining the table name corresponding to the table based on contextual information of the table in the document.

According to another aspect of the disclosure, an apparatus for processing data based on a KG is provided, and includes: an acquiring module, configured to acquire a table to be processed and a table name corresponding to the table; a recognizing module, configured to recognize the table to acquire each cell content in the table; a first determining module, configured to determine a row attribute and a column attribute corresponding to each cell content based on a matching degree between each cell content and a word segmentation in a preset table lexicon; and a second determining module, configured to determine a quadruple list corresponding to the table based on the table name, the row attribute and the column attribute corresponding to each cell contents, in which each quadruple in the quadruple list includes the table name, the row attribute, the column attribute, and an attribute value.

Optionally, the first determining module includes: a first determining unit, configured to determine a row attribute of each row and a column attribute of each column included in the table based on the matching degree between each cell content and the word segmentation in the preset table lexicon; and a second determining unit, configured to determine the row attribute and the column attribute corresponding to each cell content based on the row attribute of each row and the column attribute of each column included in the table and a row and a column where each cell content is located.

Optionally, the first determining unit includes: a first determining subunit, configured to determine a type of each first cell content included in each column in the table based on the matching degree between each first cell content and the word segmentation in the preset table lexicon; a second determining subunit, configured to determine each first cell content as a row attribute in response to the type of each first cell content being an attribute; in which the first determining subunit is further configured to determine a type of each second cell content included in each row in the table based on the matching degree between each second cell content and the word segmentation in the preset table lexicon; and the second determining subunit is further configured to determine each first cell content as a column attribute in response to the type of each second cell content being an attribute.

Optionally, the first determining subunit is configured to: determine the type of each first cell content as an attribute in response to the matching degree between each first cell content and any word segmentation being greater than a threshold value; and determine the type of each first cell content as an attribute value in response to the matching degree between each first cell content and each word segmentation being less than or equal to the threshold value.

Optionally, the first determining unit further includes: an updating subunit, configured to update the type of a first cell content to a row attribute in response to the type of the first cell content being an attribute value and the type of each first cell content other than the first cell content being an attribute.

Optionally, the second determining unit is configured to: acquire a row attribute of a row at the same position as each attribute value, and a column attribute of a column at the same position as each attribute values by taking each attribute value as a starting point.

Optionally, the second determining unit is configured to: acquire a third cell content in the same column as each first column attribute by taking each first column attribute with a highest level as a starting point; acquire a fourth cell content in the same column as the third cell content in response to the third cell content being a column attribute; and acquire a row attribute of a row at the same position as the fourth cell content in response to the fourth cell content being an attribute value.

Optionally, the acquiring module is configured to: acquire the table by parsing a document to be parsed; and determine the table name corresponding to the table based on contextual information of the table in the document.

According to another aspect of the disclosure, an electronic device is provided, and includes: at least one processor; and a memory communicatively connected to the at least one processor; the memory is stored with instructions executable by the at least one processor, the instructions are performed by the at least one processor, to cause the at least one processor to perform the method as described in the above embodiments.

According to another aspect of the disclosure, a non-transitory computer readable storage medium stored with computer instructions is provided, the computer instructions are configured to cause a computer to perform the method as described in the above embodiments by the computer.

According to another aspect of the disclosure, a computer program product including a computer program is provided, the computer program is configured to implement the method as described in the above embodiments when performed by a processor.

It should be understood that, the content described in the part is not intended to recognize key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart of a method for processing data based on a KG provided in the embodiment of the disclosure;
FIG. 2 is a flowchart of another method for processing data based on a KG provided in the embodiment of the disclosure;
FIG. 3 is a flowchart of another method for processing data based on a KG provided in the embodiment of the disclosure;
FIG. 4 is a flowchart of another method for processing data based on a KG provided in the embodiment of the disclosure;
FIG. 5 is a schematic diagram of a document processing process provided in the embodiment of the disclosure;
FIG. 6 is a block diagram of an apparatus for processing data based on a KG provided in the embodiment of the disclosure;
FIG. 7 is a block diagram of an electronic device configured to implement a method for processing data based on a KG in the embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

A method and an apparatus for processing data based on a knowledge graph (KG), an electronic device and a storage medium in the embodiment of the disclosure are described below with reference to the accompanying drawings.

Artificial intelligence (AI) is a subject that learns how a computer simulates certain thinking processes and intelligent behaviors (such as learning, reasoning, thinking, planning, etc.) of human beings, which covers hardware-level technologies and software-level technologies. AI hardware technologies generally include technologies such as sensor, dedicated AI chip, cloud computing, distributed storage, big data processing, etc.; AI software technologies include computer vision technology, speech recognition technology, natural language processing (NLP) technology, deep learning (DL), big data processing technology, knowledge graph technology, etc.

Natural Language Processing (NLP) is an important direction in the fields of computer science and artificial intelligence. The research contents of NLP include but not limited to: text classification, information extraction, automatic abstract, intelligent question answering, topic recommendation, machine translation, subject term recognition, knowledge base construction, deep text representation, named entity recognition, text generation, text analysis (morphology, syntax, grammar, etc.), voice recognition and synthesis.

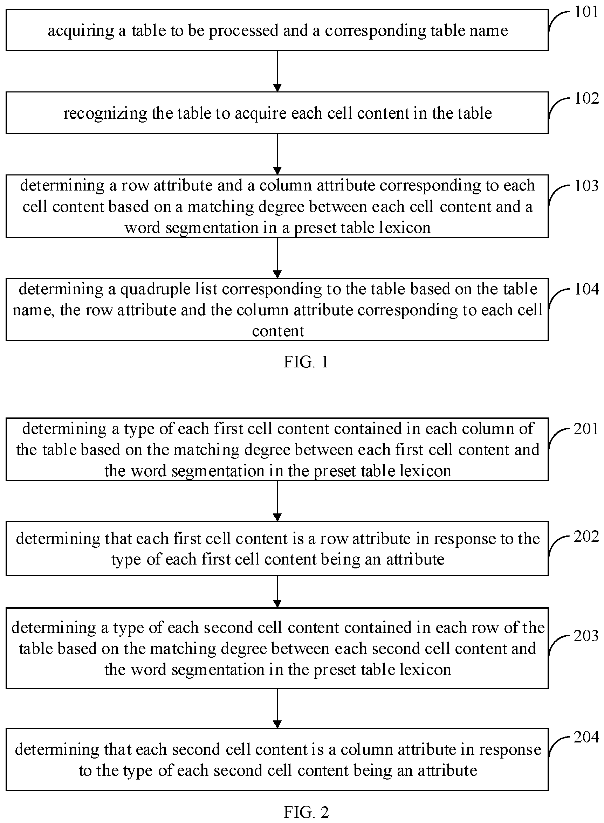

FIG. 1 is a flowchart of a method for processing data based on a KG provided in the embodiment of the disclosure.

The method for processing data based on a knowledge graph (KG) according to an embodiment may be performed by an apparatus for processing data based on a knowledge graph (KG) according to an the embodiment. The apparatus may be configured in an electronic device to acquire a quadruple list corresponding to a table and summarize layout information of a table using a quadruple, so that a row and column relationship of the table may be retained and contextual information of the table is more complete.

As illustrated in FIG. 1, the method for processing data based on a knowledge graph (KG), includes the followings.

At block 101, a table to be processed and a corresponding table name are acquired.

In the disclosure, a user may acquire a table to be processed and a corresponding table name by inputting the table to be processed and the corresponding table name. Or, a document to be processed may be parsed to extract a table in the document, and a corresponding table name may be determined based on contextual information of the table in the document.

In actual applications, the table name is generally indicated above or below the table in the document, for example, "Table 1 Average Air Temperature in February This Year".

When the table name is not indicated in the document, a paragraph above the table or a paragraph below the table may be acquired based on a position of the table in the document, and the table name may be determined based on a content of the acquired paragraph.

For example, a keyword may be extracted from the acquired paragraph, and the table name may be determined based on the keyword. Or, a first sentence of the paragraph below the table may be determined as the table name. Or, a position of a word segmentation "table" in the acquired paragraph may be determined, and the table name may be determined based on the sentence where the word segmentation is located.

In the disclosure, the table may be acquired by parsing a document, and the table name may be determined based on contextual information of the table in the document, so that the tables in the document may be processed, and the tables may have a one-to-one correspondence with the table names.

At block 102, the table is recognized to acquire each cell content in the table.

After the table to be processed and the corresponding table name are acquired, the table may be recognized, for example the table may be recognized row by row and column by column, to acquire each cell content in the table, position information corresponding to each cell content, and the like. The position information herein may refer to a row and a column where the cell content is located.

It may be understood that a two-dimensional array (also referred to as a cell matrix) corresponding to the table may be acquired based on each cell content and the row and the column where each cell content is located. A row number and a column number of the cell matrix correspond to the table, and an element in the cell matrix is a cell content. For example, the element in row 1, column 1 of the cell matrix corresponds to a cell content in row 1, column 1 of the table.

For example, a following table and a table name are acquired from a certain document, the table name of the table is "Table 1 Component Evaluation Criterion".

**Table 1 Component Evaluation Criterion**

| Component | Component State Evaluation Criterion | | | | | |
|---|---|---|---|---|---|---|
| | Normal State | | Attention State | | Abnormal State | Serious State |
| | Total Deduct marks | Single Deduct marks | Total Deduct marks | Single Deduct marks | Single Deduct marks | Single Deduct marks |
| Body | <30 | <12 | ≥30 | [12,20) | [20,30) | ≥30 |
| Bush | <20 | <12 | ≥20 | [12,20) | [20,30) | ≥30 |
| Fuse System | <20 | <12 | ≥20 | [12,20) | [20,30) | ≥30 |
| Tap Switch | <20 | <12 | ≥20 | [12,20) | [20,30) | ≥30 |
| Electrical Protection and Online Monitoring Apparatus | <20 | <12 | ≥20 | [12,20) | [20,30) | ≥30 |

Through recognition, the above table is an 8-row and 7-column table, the cell content in row 1, column 1 is Component, the cell content in each of row 1, column 2 to row 1, column 7 is Component State Evaluation Criterion, and the cell content in row 2, column 1 is Component; the cell content in each of row 2, column 2 and row 2, column 3 is Normal State, the cell content in each of row 2, column 4 and row 2, column 5 is Attention State, the cell content in row 2, column 6 is Abnormal State, and the cell content in each of row 2, column 6 and row 2, column 7 is Serious State, etc.

At block 103, a row attribute and a column attribute corresponding to each cell content are determined based on a matching degree between each cell content and a word segmentation in a preset table lexicon.

In order to acquire a row and column association relationship in the table, in the disclosure, a type of each cell content may be determined based on the matching degree between each cell content and a word segmentation in the preset table lexicon, the type may include an attribute, an attribute value, etc.

After the type of each cell content is determined, for each cell content, an attribute (may be referred to as a row attribute) in the same row as the cell content and an attribute (may be referred to as a column attribute) in the same column as the cell content are determined based on the row and column where the cell content is located. Then, for each cell content, a row attribute of the same row as the cell content is a row attribute corresponding to the cell content, and a column attribute of the same column as the cell content is a column attribute corresponding to the cell content. Thus, the row attribute and the column attribute corresponding to each cell content may be determined.

It may be understood that the column number where the row attribute of the same row as the cell content is located is less than the column number where the cell content is located, and the row number where the column attribute of the same column as the cell content is located is less than the row number where the cell content is located.

For example, in the above Table 1, the cell content in row 4, column 2 is "< 30", the row attribute of the same row is "Body" in column 1 which is less than column 2, and the column attributes of the same column are Component Evaluation Criterion in row 1, Normal State in row 2, and Total Deduct marks in row 3, which are both less than row 4.

Or, a row attribute and a column attribute in the table may be determined based on the preset table lexicon. The preset table lexicon may be a table lexicon matched with the table name, and when the table is acquired from a document, the table lexicon corresponding to a type to which the document belongs may be determined as the preset table lexicon.

In the disclosure, each cell content may be matched with a word segmentation in the preset table lexicon to acquire a matching degree between each cell content and the word segmentation in the preset table lexicon, and a row attribute of each row and a column attribute of each column contained in the table may be determined based on the matching degree between each cell content and the word segmentation in the preset table lexicon.

For example, when a row attribute is determined, each cell content in each row may be matched with the word segmentation in the table lexicon. If there is a preset proportion of cell contents in a certain row each of which has the matching degree with the word segmentation in the table lexicon greater than a threshold value, and a cell content having the matching degree with each word segmentation in the table lexicon less than or equal to the threshold value exists in the cell contents in the same column as a certain cell content of the preset proportion of cell contents each having the matching degree greater than the threshold value, it may be deemed that the cell content is a column attribute.

Taking the above Table 1 for an example, the cell contents in row 1 include Component and Component Evaluation Criterion, and Component and Component Evaluation Criterion may be respectively matched with the word segmentations in the table lexicon. It may be deemed that Component Evaluation Criterion is a column attribute if the matching degree between Component and a certain word segmentation in the table lexicon is greater than the threshold value and the matching degree between Component Evaluation Criterion and a certain word segmentation in the table lexicon is greater than the threshold value, and a content having the matching degree with each word segmentation in the table lexicon less than the threshold value exists in the cell contents in the same column as Component Evaluation Criterion. It may be determined that column attributes in Table 1 include Component State Evaluation Criterion, Normal State, Attention State, Abnormal State, Serious State, Total Deduct marks and Single Deduct marks.

The method for determining a row attribute is similar to the method for determining a column attribute, which is not repeated here.

Since the row and the column where each cell content is located are known, a row and a column where each row attribute and each column attribute are located may be determined when determining each row attribute and each column attribute contained in the table.

In the related art, a table value field may be simply extracted when a table is processed, which may lose layout information and affect the accuracy of understanding an unstructured content.

A row attribute and a column attribute corresponding to each cell content may be determined based on the row attribute of each row and the column attribute of each column contained in the table and the row and the column where each cell content is located after determining the row attribute of each row and the column attribute of each column contained in the table.

In an implementation, for each cell content, a row attribute of the same row as the cell content and a column attribute of the same column as the cell content may be determined based on the row and the column where the cell content is located, that is, a row attribute of the same row as the cell content is a row attribute corresponding to the cell content, and a column attribute of the same column as the cell content is a column attribute corresponding to the cell content.

It should be noted that, it may be deemed that the row attribute and the column attribute corresponding to the cell content are empty in response to the cell content itself being a row attribute or a column attribute.

At block 104, a quadruple list corresponding to the table is determined based on the table name, the row attribute and the column attribute corresponding to each cell content.

The quadruple list corresponding to the table may be determined based on the table name, the row attribute and the column attribute corresponding to each cell content after the row attribute and the column attribute corresponding to each cell content is acquired. Each quadruple in the quadruple list may include the table name, the row attribute, the column attribute, and a corresponding attribute value.

The attribute value in the quadruple is a common value of the row attribute and the column attribute, that is, a corresponding same cell content. For example, in the above Table 1, a common value of three column attributes Component State Evaluation Criterion, Normal State and Total Deduct marks and the row attribute Body is a cell content "<30".

In the disclosure, a quadruple may be determined based on the table name, the row attribute and the column attribute corresponding to each cell content. The attribute value in the quadruple is a cell content corresponding to the row attribute and the column attribute, and the quadruple may be represented as (table name, row attribute, column attribute, attribute value).

Taking the above Table 1 for an example, the quadruples in the table include (Table 1 Component Evaluation Criterion, Body, Component State Evaluation Criterion-Normal State-Total Deduct marks, <30), (Table 1 Component Evaluation Criterion, Bush, Component State Evaluation Criterion-Normal State-Total Deduct marks, <20), (Table 1 Component Evaluation Criterion, Fuse System, Component State Evaluation Criterion-Normal State-Total Deduct marks, <20), (Table 1 Component Evaluation Criterion, Tap Switch, Component State Evaluation Criterion-Normal State-Total Deduct marks, <20), (Table 1 Component Evaluation Criterion, Electrical Protection and Online Monitoring Apparatus, Component State Evaluation Criterion-Normal State-Total Deduct marks, <20), (Table 1 Component Evaluation Criterion, Body, Component State Evaluation Criterion-Normal State-Single Deduct marks, <12), etc.

It needs to be noted that, the format of the above quadruple is only an example, and a sequence of the contents in the quadruple is not limited.

The method for processing data based on a knowledge graph (KG) in the embodiment may be applied to processing of a complex table in a document, and a row and column relationship of the complex table may be retained by intelligently extracting the table in the document based on a quadruple. Since the quadruple may be deemed as a supplementary format of a triple in the KG, a data format extracted from the table may be directly pushed in a knowledge library after further processing, and may match various databases, to rapidly complete information association and information retrieval. Further, from inputting the document to acquiring a quadruple list of the table acquisition, the process may be streamed automatically completed, which enhances a data parsing performance as well as an effect.

In the disclosure, a table to be processed and a corresponding table name are acquired; the table is recognized to acquire each cell content in the table; a row attribute and a column attribute corresponding to each cell content are determined based on a matching degree between each cell content and a word segmentation in a preset table lexicon; and a quadruple list corresponding to the table is determined based on the table name, the row attribute and the column attribute corresponding to each cell content. Therefore, the quadruple list corresponding to the table is acquired by acquiring the table name, the row attribute and the column attribute corresponding to each cell content in the table, thereby summarizing layout information of the table by means of a quadruple and retaining a row and column relationship of the table, so that contextual information of the table is more complete.

In one embodiment of the disclosure, a method as illustrated in FIG. 2 may be used to determine a row attribute of each row and a column attribute of each column contained in the table. FIG. 2 is a flowchart of another method for processing data based on a KG provided in the embodiment of the disclosure.

As illustrated in FIG. 2, determining the row attribute of each row and the column attribute of each column contained in the table based on the matching degree between each cell content and the word segmentation in the preset table lexicon may include the followings.

At block 201, a type of each first cell content contained in each column in the table is determined based on the matching degree between each first cell content and the word segmentation in the preset table lexicon.

In the disclosure, for each column in the table, the matching degree between each first cell content contained in the column and the word segmentation in the table lexicon may be acquired, and the type of each first cell content may be determined based on a size relation of the matching degree and the threshold value.

For example, it may be determined that the type of the first cell content is an attribute in response to the matching degree between the first cell content and any word segmentation in the table lexicon being greater than the threshold value; and it may be deemed that the type of the first cell content is an attribute value in response to the matching degree between the first cell content and each word segmentation in the table lexicon being less than or equal to the threshold value. Therefore, the type of the cell content may be determined based on the size relation of the matching degree between the cell content and the word segmentation in the table lexicon and the threshold value, thereby facilitating to determine a type of an attribute.

In practical applications, cell contents in adjacent rows in the same row may be the same, or cell contents in adjacent rows in the same column may be the same, for example, in the above Table 1, the cell contents in column 2 and column 7 and in row 1 are Component Evaluation Criterion. Therefore, when the type of each cell content in each row is determined, in response to cell contents in adjacent columns being the same, the cell contents may be deemed as one cell content, without repeatedly determining the type of the cell content.

In practical applications, the cell contents in certain columns in the same row may be the same, for example, in row 3 of the above Table 1, the cell contents in column 2 and column 4 are Total Deduct marks, and the cell contents in column 3, column 5 and column 6 are Single Deduct marks. Therefore, the type of the cell contents with the same content in the same row or in the same column may be determined once. For example, if the type of the cell content Total Deduct marks in row 3, column 2 is determined as an attribute, it may be determined that the type of the cell content in row 3, column 4 is also an attribute.

At block 202, it is determined that each first cell content is a row attribute in response to the type of each first cell content being an attribute.

In the disclosure, in response to the type of each first cell content contained in a certain column being an attribute, it may be determined that each cell content in the column is a row attribute, that is, each first cell content in the column is a row attribute. Therefore, the row attribute of each row contained in the table may be determined.

Taking the above Table 1 for an example, the type of each cell content in column 1 is an attribute, it may be determined that each cell content in column 1 is a row attribute.

At block 203, a type of each second cell content contained in each row of the table is determined based on the matching degree between each second cell content and the word segmentation in the preset table lexicon.

In the disclosure, for each row in the table, the matching degree between each second cell content contained in the row and the word segmentation in the table lexicon may be acquired, and the type of each second cell content may be determined based on a size relation of the matching degree and the threshold value. The method for determining the type of each second cell content is similar with the method for determining the type of each first cell content, which is not repeated here.

At block 204, it is determined that each second cell content is a column attribute in response to the type of each second cell content being an attribute.

In the disclosure, in response to the type of each second cell content contained in a certain row being an attribute, it may be deemed that each cell content in the row is a column attribute, that is, each second cell content in the row is a column attribute. Therefore, the column attribute of each column contained in the table may be determined.

Taking the above Table 1 for an example, the type of each of Component and Component Evaluation Criterion in row 1 is an attribute, it may be determined that Component and Component Evaluation Criterion in row 1 are column attributes.

A row attribute and a column attribute corresponding to each cell content may be determined based on the row attribute of each row and the column attribute of each column contained in the table and the row and the column where each cell content is located after determining the row attribute of each row and the column attribute of each column contained in the table, further a quadruple list corresponding to the table is determined based on the table name, the row attribute and the column attribute corresponding to each cell content. Therefore, on the basis of retaining semantic information, a quadruple fully combines row and column information of the table, so that contextual information of the table is more complete.

In the embodiment of the disclosure, when the row attribute of each row and the column attribute of each column contained in the table are determined based on the matching degree between each cell content and the word segmentation in the preset table lexicon, a type of each first cell content contained in each column of the table may be determined based on the matching degree between each first cell content and the word segmentation in the preset table lexicon, and each first cell content may be determined as a row attribute in response to the type of each first cell content being an attribute, and further a type of each second cell content contained in each row of the table may be determined based on the matching degree between each second cell content and the word segmentation in the preset table lexicon, and each second cell content may be determined as a column attribute in response to the type of each second cell content being an attribute. Therefore, the row attribute contained in the table may be determined column by column, and the column attribute contained in the table may be determined row by row.

In actual applications, there may be a misjudgment. For example, there are 5 cell contents in a certain row, in which, the type of the cell content in 4 cell contents is an attribute, and the type of 1 cell content is an attribute value.

Based on this, in one embodiment of the disclosure, after the type of each first cell content is determined, for each column, in response to the type of any first cell content being an attribute value, and the type of each remaining first cell content being an attribute, it may be deemed that there may be a misjudgment for the type of any first cell content, and the type of any first cell content may be determined as a row attribute.

Similarly, after the type of each second cell content is determined, for each column, in response to the type of any second cell content being an attribute value, and the type of each remaining second cell content being an attribute, the type of any second cell content may be updated to a column attribute.

Taking column 2 in the above Table 1 for an example, the type of each of Component, Normal State, Attention State and Abnormal State is an attribute, while the type of Serious State is an attribute value, it may be deemed that a misjudgment is made for the type of Serious State, and the type of Serious State may be updated to a column attribute.

In the embodiment of the disclosure, after the type of each first cell content is determined, the type of any first cell content may be updated to a row attribute in response to the type of the first cell content being an attribute value, and the type of each remaining first cell content being an attribute. The same manner may be adopted when a column attribute is determined. Therefore, a misjudgment may be avoided, which improves an accuracy of extracting an attribute.

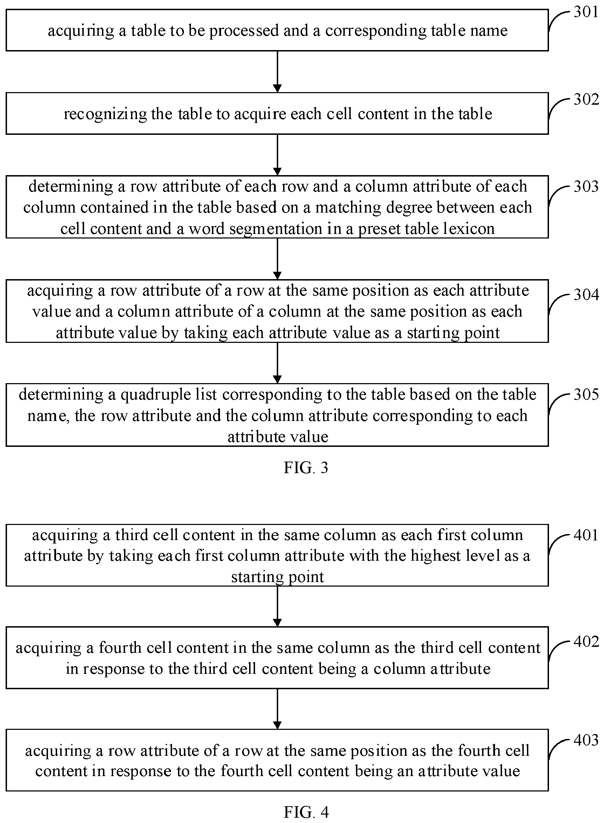

FIG. 3 is a flowchart of another method for processing data based on a KG provided in the embodiment of the disclosure.

As illustrated in FIG. 3, the method for processing data based on a knowledge graph (KG) includes the followings.

At block 301, a table to be processed and a corresponding table name are acquired.

At block 302, the table is recognized to acquire each cell content in the table.

At block 303, a row attribute of each row and a column attribute of each column contained in the table are determined based on a matching degree between each cell content and a word segmentation in the preset table lexicon.

In the disclosure, blocks 301 to 303 are similar with blocks 101 to 103, which are not repeated here.

At block 304, a row attribute of a row at the same position as each attribute value and a column attribute of a column at the same position as each attribute value are acquired by taking each attribute value as a starting point.

In the disclosure, when the row attribute of each row and the column attribute of each column contained in the table are determined based on the table lexicon, each attribute value contained in the table may be determined.

For each attribute value, a row attribute of a row at the same position as each attribute value and a column attribute of a column at the same position as each attribute value may be acquired by taking each attribute value as a starting point. Thus, a row attribute and a column attribute corresponding to each attribute value may be determined.

Taking an attribute value "<12" in row 4, column 3 in Table 1for an example, the row attribute of the same row as the attribute value is Body, and the column attribute of the same column as the attribute value are Single Deduct marks, Normal State and Component State Evaluation Criterion. Then, it may be determined that the row attribute corresponding to the attribute value is Body, and the column attributes corresponding to the attribute value are Component Evaluation State Criterion, Normal State and Single Deduct marks.

At block 305, a quadruple list corresponding to the table is determined based on the table name, the row attribute and the column attribute corresponding to each attribute value.

Each quadruple corresponding to the table may be determined based on the table name, the row attribute and the column attribute corresponding to each cell content after the row attribute and the column attribute corresponding to each attribute value are determined.

For example, in the above Table 1, the table name is Table 1 Component Evaluation Criterion, a row attribute corresponding to an attribute value "<12" in row 4, column 3 is Body, there are 3 column attributes corresponding to the attribute value "<12", which are respectively Component State Evaluation Criterion, Normal State and Single Deduct marks, it may be determined that the corresponding quadruple is (Table 1 Component Evaluation Criterion, Body, Component State Evaluation Criterion-Normal State-Single Deduct marks, <12).

When there are a plurality of column attributes corresponding to an attribute value, the column attributes may be ranked in an ascending order of the row numbers where the column attributes are located when determining a quadruple. For example, the attribute value "<12" in row 4, column 3 in Table 1 corresponds to 3 column attributes, which are respectively Component State Evaluation Criterion, Normal State and Single Deduct marks. Since the rows where the 3 column attributes Component State Evaluation Criterion, Normal State and Single Deduct marks are located are respectively row 1, row 2, row 3, the 3 column attributes may be ranked in the order of row 1 to row 3 to obtain Component State Evaluation Criterion, Normal State and Single Deduct marks.

When there are a plurality of row attributes corresponding to an attribute value, the row attributes may be ranked in an ascending order of the column numbers where the row attributes are located when determining a quadruple.

In the embodiment of the disclosure, when a row attribute and a column attribute corresponding to each cell content are determined, a row attribute of a row at the same position as each attribute value and a column attribute of a column at the same position as each attribute value may be acquired by taking each attribute value as a starting point. Thus, a row attribute and a column attribute corresponding to each attribute value may be determined, and further each quadruple corresponding to the table may be determined based on the table name, the row attribute and the column attribute corresponding to each attribute value.

In one embodiment of the disclosure, a manner as illustrated in FIG. 4 may be used to determine a row attribute and a column attribute corresponding to each cell content. FIG. 4 is a flowchart of another method for processing data based on a KG provided in the embodiment of the disclosure.

As illustrated in FIG. 4, determining a row attribute and a column attribute corresponding to each cell content based on the row attribute of each row and the column attribute of each column comprised in the table and the row and the column where each cell content is located includes the followings

At block 401, a third cell content in the same column as each first column attribute is acquired by taking each first column attribute with a highest level as a starting point.

In the disclosure, the third cell content in the same column as each first column attribute may be acquired by taking each column attribute (which is referred to as a first column attribute for convenience of description) with the highest level as a starting point. The column attribute with the highest level may be understood as a column attribute in the lowest row, for example, Component State Evaluation Criterion in the above Table 1 has the highest level in row 1.

The third cell content may be understood as a cell content with a level lower than the first column attribute. For example, the cell content Normal State in row 2, column 2 may be acquired with Component State Evaluation Criterion in row 1, column 2 as a starting point, that is, the third cell content is Normal State.

At block 402, a fourth cell content in the same column as the third cell content is acquired in response to the third cell content being a column attribute.

A fourth cell content in a next row in the same column of the third cell content or the first column attribute may continue to be acquired in response to the third cell content being a column attribute. The fourth cell content may be understood as a cell content with a level lower than the third cell content.

For example, in the above Table 1, the third cell content is a column attribute Normal State, and the fourth cell content in the same column is Total Deduct marks by taking Component State Evaluation Criterion in row 1, column 2 as a starting point.

At block 403, a row attribute of a row at the same position as the fourth cell content is acquired in response to the fourth cell content being an attribute value.

A row attribute of a row at the same position as the fourth cell content may be acquired in response to the fourth cell content being an attribute value. Thus, the row attribute of a row at the same position as the fourth cell content may be determined as a row attribute corresponding to the fourth cell content, and the first column attribute and the third cell content may be determined as corresponding column attributes.

When the fourth cell content is a column attribute, a cell content in the same column with a level lower than the fourth cell content may continue to be acquired, and when the fourth cell content is an attribute value, a row attribute in the same row as the fourth cell content may be acquired. Thus, a row attribute and a column attribute corresponding to the cell content may be determined. Then, a cell content in the same column may continue to be acquired, and when the cell content is an attribute value, a row attribute of the same row as the attribute value is acquired until all the cell contents in the same column as the first column attribute are traversed.

For example, in the above Table 1, with the first column attribute Component state Evaluation Criterion in row 1, column 2 as a starting point, the third cell content is a column attribute Normal State, and the fourth cell content in row 2, column 2 is Total Deduct marks. A cell content in row 3, column 2 continues to be acquired, in response to the cell content being an attribute value, a row attribute Body in the same row as the cell content may be acquired. Then, a cell content in row 4, column 2 continues to be acquired, in response to the cell content being an attribute value, a row attribute in the same row as the cell content may be acquired. Then, a cell content in row 5 continues to be acquired until a row attribute of the cell content in row 8, column 2 is traversed and determined.

The above method may be performed for each first column attribute, to acquire a row attribute and a column attribute corresponding to each attribute value in the table.

It may be understood that, by taking each first row attribute with the highest level as a starting point, a corresponding attribute value may be determined firstly and then a corresponding column attribute may be acquired based on the column where the attribute value is located.

In the embodiment of the disclosure, when a row attribute and a column attribute corresponding to each cell content are determined, a third cell content in the same column as each first column attribute may be acquired by taking each first column attribute with the highest level as a starting point; a fourth cell content in the same column as the third cell content is acquired in response to the third cell content being a column attribute; and a row attribute of a row at the same position as the fourth cell content is acquired in response to the fourth cell content being an attribute value. Thus, a row attribute and a column attribute corresponding to each attribute value may be determined, and further each quadruple corresponding to the table may be determined based on the table name, the row attribute and the column attribute corresponding to each attribute value.

In one embodiment of the disclosure, when a row attribute and a column attribute corresponding to each cell content are determined, for each first column attribute with the highest level, a column attribute in the same column and each attribute value further may be acquired. For each attribute value, a row attribute in the same row as each attribute value may be acquired. Thus, a row attribute and a column attribute corresponding to each attribute value may be determined, in which, the column attribute corresponding to each attribute value is the same. Therefore, the same method may be performed for each first column attribute, to acquire a row attribute and a column attribute corresponding to each attribute value in the table.

It may be understood that, for each row attribute with the highest level, a row attribute in the same row and each attribute value further may be acquired. A row attribute in the same column as each attribute value may be acquired for each attribute value. Thus, a row attribute and a column attribute corresponding to each attribute value may be determined, in which, the row attribute corresponding to each attribute value is the same. Therefore, the same method may be performed for each first row attribute value, to acquire a row attribute and a column attribute corresponding to each attribute value in the table.

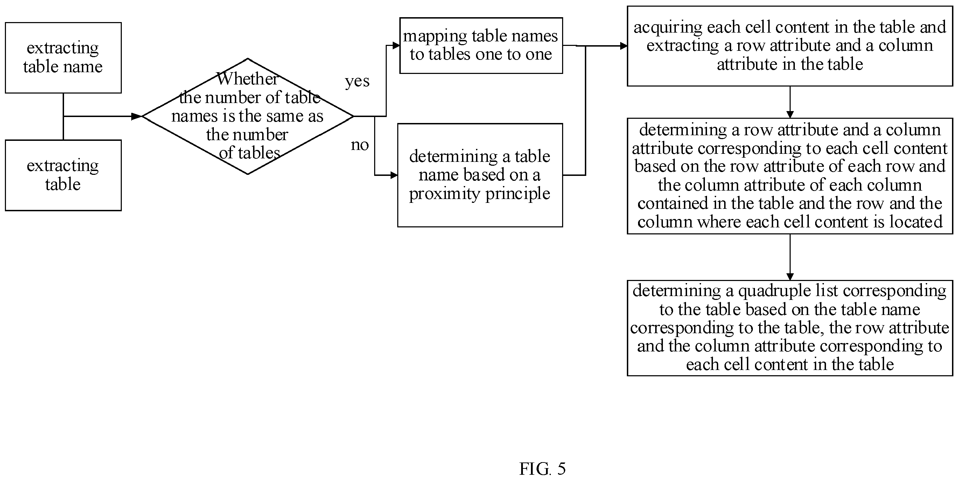

FIG. 5 is a schematic diagram of a document processing process provided in the embodiment of the disclosure.

As illustrated in FIG. 5, a table name and a table are respectively extracted from a document, and it is determined whether the number of table names is the same as the number of tables. The table names are mapped to tables one to one in response to the number of table names being the same as the number of tables. A table name may be determined from a subtitle area corresponding to a table in a document based on a proximity principle in response to the number of table names being not the same as the number of tables. Then, for each table, each cell content in the table may be acquired and a row attribute and a column attribute in the table may be extracted based on the matching degree between each cell content in the table and a word segmentation in a preset table lexicon. Then, a row attribute and a column attribute corresponding to each cell content are determined based on the row attribute of each row and the column attribute of each column contained in the table and the row and the column where each cell content is located. Then, a quadruple list corresponding to the table is determined based on the table name corresponding to the table, the row attribute and the column attribute corresponding to each cell content in the table.

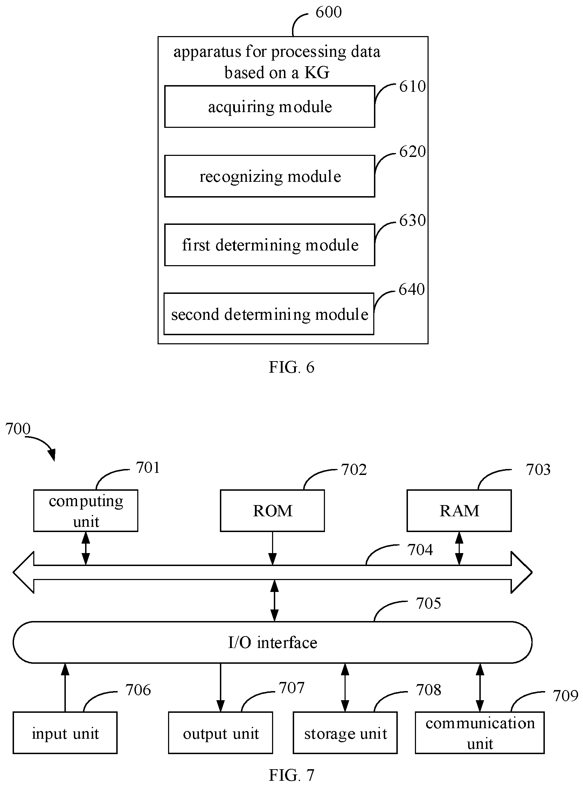

In order to achieve the above embodiment, an apparatus for processing data based on a KG is further provided in the embodiment of the disclosure. FIG. 6 is a block diagram of an apparatus for processing data based on a KG provided in the embodiment of the disclosure.

As illustrated in FIG. 6, the apparatus 600 for processing data based on a KG includes an acquiring module 610, a recognizing module 620, a first determining module 630 and a second determining module 640.

The acquiring module 610 is configured to acquire a table to be processed and a table name corresponding to the table. The recognizing module 620 is configured to recognize the table to acquire each cell content in the table. The first determining module 630 is configured to determine a row attribute and a column attribute corresponding to each cell content based on a matching degree between each cell content and a word segmentation in a preset table lexicon. The second determining module 640 is configured to determine a quadruple list corresponding to the table based on the table name, the row attribute and the column attribute corresponding to each cell content, in which each quadruple in the quadruple list includes the table name, the row attribute, the column attribute, and an attribute value.

In one possible implementation of the embodiment of the disclosure, the first determining module 630 may include a first determining unit and a second determining unit.

The first determining unit is configured to determine a row attribute of each row and a column attribute of each column contained in the table based on the matching degree between each cell content and the word segmentation in the preset table lexicon. The second determining unit is configured to determine the row attribute and the column attribute corresponding to each cell content based on the row attribute of each row and the column attribute of each column comprised in the table and a row and a column where each cell content is located.

In one possible implementation of the embodiment of the disclosure, the first determining unit may include a first determining subunit and a second determining subunit.

The first determining subunit is configured to determine a type of each first cell content contained in each column in the table based on the matching degree between each first cell content and the word segmentation in the preset table lexicon; the second determining subunit is configured to determine each first cell content as a row attribute in response to the type of each first cell content being an attribute. The first determining subunit is further configured to determine a type of each second cell content contained in each row of the table based on the matching degree between each second cell content and the word segmentation in the preset table lexicon; and the second determining subunit is configured to determine each first cell content as a column attribute in response to the type of each second cell content being an attribute.

In one possible implementation of the embodiment of the disclosure, the first determining subunit may be configured to: determine the type of each first cell content as an attribute in response to the matching degree between each first cell content and any word segmentation being greater than a threshold value; and determine the type of each first cell content as an attribute value in response to the matching degree between each first cell content and each word segmentation being less than or equal to the threshold value.

In one possible implementation of the embodiment of the disclosure, the first determining module 630 further may include an updating subunit.

The updating subunit is configured to update the type of a first cell content to a row attribute in response to the type of the first cell content being an attribute value, and the type of each remaining first cell content being an attribute.

In one possible implementation of the embodiment of the disclosure, the second determining unit may be configured to: acquire a row attribute of a row at the same position as each attribute value, and a column attribute of a column at the same position as each attribute value by taking each attribute value as a starting point.

In one possible implementation of the embodiment of the disclosure, the second determining unit may be configured to: acquire a third cell content in the same column as each first column attribute by taking each first column attribute with a highest level as a starting point; acquire a fourth cell content in the same column as the third cell content in response to the third cell content being a column attribute; and acquire a row attribute of a row at the same position as the fourth cell content in response to the fourth cell content being an attribute value.

In an implementation of the embodiment of the disclosure, the acquiring module 610 may be configured to: acquire the table by parsing a document to be parsed; and determine the table name corresponding to the table based on contextual information of the table in the document.

It should be noted that the foregoing explanation of the method for processing data based on a KG is also applied to the apparatus for processing data based on a KG in the embodiment, which will not be repeated here.

In the disclosure, a table to be processed and a corresponding table name are acquired; the table is recognized to acquire each cell content in the table; a row attribute and a column attribute corresponding to each cell content are determined based on a matching degree between each cell content and a word segmentation in a preset table lexicon; and a quadruple list corresponding to the table is determined based on the table name, the row attribute and the column attribute corresponding to each cell content. Therefore, the quadruple list corresponding to the table is acquired by acquiring the table name, the row attribute and the column attribute corresponding to each cell content in the table, thereby summarizing layout information of the table by means of a quadruple and retaining a row and column relationship of the table, so that the contextual information of the table is more complete.

According to the embodiment of the disclosure, an electronic device, a readable storage medium and a computer program product are further provided in the disclosure.

FIG. 7 is a schematic block diagram illustrating an example electronic device 700 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 7, the device 700 includes a computing unit 701 configured to execute various appropriate actions and processings according to the computer program stored in a read-only memory (ROM) 702 or loaded from a storage unit 708 to a random access memory (RAM) 703. In a RAM 703, various programs and data required for a device 700 may be stored. A computing unit 701, a ROM 702 and a RAM 703 may be connected with each other by a bus 704. An input/output (I/O) interface 705 is also connected to a bus 704.

A plurality of components in the device 700 are connected to an I/O interface 705, and includes: an input unit 706, for example, a keyboard, a mouse, etc.; an output unit 707, for example various types of displays, speakers; a storage unit 708, for example a magnetic disk, an optical disk; and a communication unit 709, for example, a network card, a modem, a wireless transceiver. A communication unit 709 allows a device 700 to exchange information/data through a computer network such as internet and/or various types of telecommunication networks and other devices.

The computing unit 701 may be various types of general and/or dedicated processing components with processing and computing ability. Some examples of a computing unit 701 include but not limited to a central processing unit (CPU), a graphic processing unit (GPU), various dedicated artificial intelligence (AI) computing chips, various computing units running a machine learning model algorithm, a digital signal processor (DSP), and any appropriate processor, controller, microcontroller, etc. The computing unit 701 performs various methods and processings as described above, for example, a method for processing data based on a KG. For example, in some embodiments, the method for processing data based on a KG may be further achieved as a computer software program, which is physically contained in a machine readable medium, such as a storage unit 708. In some embodiments, a part or all of the computer program may be loaded and/or installed on the device 700 through a ROM 702 and/or a communication unit 709. When the computer program is loaded on a RAM 703 and performed by a computing unit 701, one or more blocks in the above method for processing data based on a KG may be performed. Alternatively, in other embodiments, the computing unit 701 may be configured to perform a method for processing data based on a KG in other appropriate ways (for example, by virtue of a firmware).

Various implementation modes of systems and technologies described herein may be implemented in a digital electronic circuit system, an integrated circuit system, a field programmable gate array (FPGA), a dedicated application specific integrated circuit (ASIC), an application specific standard product (ASSP), a system on a chip (SoC), a complex programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a RAM, a ROM, an EPROM or a flash memory, an optical fiber device, and a compact disc read-only memory(CD-ROM), an optical storage device, a magnetic storage device, or any appropriate combination thereof.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may be further configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). The examples of a communication network include a Local Area Network (LAN), a Wide Area Network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

According to the embodiment of the disclosure, a computer program product is further provided. The instructions in the computer program product are configured to perform a method for processing data based on a KG as described when performed by a processor.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of embodiments of the present disclosure.

## Claims

1. A method for processing data based on a knowledge graph, KG, comprising:
acquiring (101, 301) a table to be processed and a table name corresponding to the table;
recognizing (102, 302) the table to acquire each cell content in the table;
determining (103) a row attribute and a column attribute corresponding to each cell content based on a matching degree between each cell content and a word segmentation in a preset table lexicon; and
determining (104, 305) a quadruple list corresponding to the table based on the table name, the row attribute and the column attribute corresponding to each cell content, wherein, each quadruple in the quadruple list comprises the table name, the row attribute, the column attribute, and an attribute value.

2. The method of claim 1, wherein, determining (103) the row attribute and each column attribute corresponding to the cell content based on the matching degree between each cell content and the word segmentation in the preset table lexicon, comprises:
determining (303) a row attribute of each row and a column attribute of each column comprised in the table based on the matching degree between each cell content and the word segmentation in the preset table lexicon; and
determining the row attribute and the column attribute corresponding to each cell content based on the row attribute of each row and the column attribute of each column comprised in the table and a row and a column where each cell content is located.

3. The method of claim 2, wherein, determining (303) the row attribute of each row and the column attribute of each column comprised in the table based on the matching degree between each cell content and the word segmentation in the preset table lexicon, comprises:
determining (201) a type of each first cell content comprised in each column in the table based on the matching degree between each first cell content and the word segmentation in the preset table lexicon;
determining (202) each first cell content as a row attribute in response to the type of each first cell content being an attribute;
determining (203) a type of each second cell content comprised in each row in the table based on the matching degree between each second cell content and the word segmentation in the table lexicon; and
determining (204) each second cell content as a column attribute in response to the type of each second cell content being an attribute.

4. The method of claim 3, wherein, determining (201) the type of each first cell content comprised in each column in the table based on the matching degree between each first cell content and the word segmentation in the table lexicon, comprises:
determining the type of each first cell content as an attribute in response to the matching degree between each first cell content and any word segmentation being greater than a threshold value; and
determining the type of each first cell content as an attribute value in response to the matching degree between each first cell content and each word segmentation being less than or equal to the threshold value.

5. The method of claim 3 or 4, after determining (201) the type of each first cell content, further comprising:
updating the type of a first cell content to a row attribute in response to the type of the first cell content being an attribute value and the type of each first cell content other than the first cell content being an attribute.

6. The method of claim 4 or 5, wherein, determining the row attribute and the column attribute corresponding to each cell content based on the row attribute of each row and the column attribute of each column comprised in the table and the row and the column where each cell content is located, comprises:
acquiring (304) a row attribute of a row at the same position as each attribute value, and a column attribute of a column at the same position as each attribute value by taking each attribute value as a starting point.

7. The method of any of claims 2-6, wherein, determining the row attribute and the column attribute corresponding to each cell content based on the row attribute of each row and the column attribute of each column comprised in the table and the row and the column where each cell content is located, comprises:
acquiring (401) a third cell content in the same column as each first column attribute by taking each first column attribute with a highest level as a starting point;
acquiring (402) a fourth cell content in the same column as the third cell content in response to the third cell content being a column attribute; and
acquiring (403) a row attribute of a row at the same position as the fourth cell content in response to the fourth cell content being an attribute value.

8. The method of any of claims 1 to 7, wherein, acquiring (101, 301) the table to be processed and the table name corresponding to the table, comprises:
acquiring the table by parsing a document to be parsed; and
determining the table name corresponding to the table based on contextual information of the table in the document.

9. An apparatus (600) for processing data based on a knowledge graph, KG, comprising:
an acquiring module (610), configured to acquire a table to be processed and a table name corresponding to the table;
a recognizing module (620), configured to recognize the table to acquire each cell content in the table;
a first determining module (630), configured to determine a row attribute and a column attribute corresponding to each cell content based on a matching degree between each cell content and a word segmentation in a preset table lexicon; and
a second determining module (640), configured to determine a quadruple list corresponding to the table based on the table name, the row attribute and the column attribute corresponding to each cell content, wherein, each quadruple in the quadruple list comprises the table name, the row attribute, the column attribute, and an attribute value.

10. The apparatus (600) of claim 9, wherein, the first determining module (630) comprises:
a first determining unit, configured to determine a row attribute of each row and a column attribute of each column comprised in the table based on the matching degree between each cell content and the word segmentation in the preset table lexicon; and
a second determining unit, configured to determine the row attribute and the column attribute corresponding to each cell content based on the row attribute of each row and the column attribute of each column comprised in the table and a row and a column where each cell content is located.

11. The apparatus (600) of claim 10, wherein, the first determining unit comprises:
a first determining subunit, configured to determine a type of each first cell content comprised in each column in the table based on the matching degree between each first cell content and the word segmentation in the preset table lexicon;
a second determining subunit, configured to determine each first cell content as a row attribute in response to the type of each first cell content being an attribute;
wherein the first determining subunit is further configured to determine a type of each second cell content comprised in each row in the table based on the matching degree between each second cell content and the word segmentation in the preset table lexicon; and
the second determining subunit is further configured to determine each first cell content as a column attribute in response to the type of each second cell content being an attribute.

12. The apparatus (600) of claim 11, wherein, the first determining subunit is configured to:
determine the type of each first cell content as an attribute in response to the matching degree between each first cell content and any word segmentation being greater than a threshold value; and
determine the type of each first cell content as an attribute value in response to the matching degree between each first cell content and each word segmentation being less than or equal to the threshold value.

13. The apparatus of any of claims 10-12, wherein, the second determining unit is configured to:
acquire a third cell content in the same column as each first column attribute by taking each first column attribute with a highest level as a starting point;
acquire a fourth cell content in the same column as the third cell content in response to the third cell content being a column attribute; and
acquire a row attribute of a row at the same position as the fourth cell content in response to the fourth cell content being an attribute value.

14. A non-transitory computer readable storage medium stored with computer instructions, wherein, the computer instructions are configured to cause a computer to perform the method of any of claims 1 to 8.

15. A computer program product comprising a computer program, wherein the computer program implements the method of any of claims 1 to 8 when performed by a processor.
